(19) Europäisches Patentamt European Patent Office Office européen des brevets

(11) **EP 4 383 140 B1**

(12) **EUROPEAN PATENT SPECIFICATION**

(45) Date of publication and mention
of the grant of the patent:
**23.07.2025 Bulletin 2025/30**

(21) Application number: **22306816.4**

(22) Date of filing: **07.12.2022**

(51) International Patent Classification (IPC):
**G06N 10/40** *(2022.01)* **G06N 10/70** *(2022.01)*
**B82Y 10/00** *(2011.01)*

(52) Cooperative Patent Classification (CPC):
**G06N 10/40; G06N 10/70; B82Y 10/00**

(54) **MINIMAL SUPERCONDUCTING QUANTUM CIRCUIT FOR BOSONIC CODES WITH GALVANIC COUPLING**

MINIMALE SUPRALEITENDE QUANTENSCHALTUNG FÜR BOSONISCHE CODES MIT GALVANISCHER KOPPLUNG

CIRCUIT QUANTIQUE SUPRACONDUCTEUR MINIMAL POUR CODES BOSONIQUES À COUPLAGE GALVANIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**12.06.2024 Bulletin 2024/24**

(73) Proprietor: **Alice & Bob 75015 Paris (FR)**

(72) Inventors:
• **ESSIG, Antoine 75015 Paris (FR)**
• **LESCANNE, Raphaël 75015 Paris (FR)**
• **JEZOUIN, Sébastien 75015 Paris (FR)**

(74) Representative: **Cabinet Netter 36, avenue Hoche 75008 Paris (FR)**

(56) References cited:
• **LESCANNE RAPHAËL: "Engineering multi-photon dissipation in superconducting circuits for quantum error correction", 9 March 2021 (2021-03-09), HAL open science, pages 1 - 170, XP093042081, Retrieved from the Internet <URL:https://hal.science/tel-03164025/> [retrieved on 20230425]**

**Description**

The invention concerns the field of superconducting quantum circuits, and more specifically, superconducting quantum circuits including a cat qubit.

Cat qubits are a subset of bosonic codes, which form a family of error correction codes for quantum applications. Generally speaking, bosonic codes rely on storage of the qubits in bosonic modes. In the case of cat qubits, a 2-component cat code has been the most common design to date.

The dissipative stabilization of two coherent states requires to engineer a non-linear conversion between two photons of a first mode that hosts the stabilized quantum manifold, this mode is also called the cat qubit mode, and one photon of a second mode known as buffer mode, and conversely. Such a stabilization scheme allows to suppress bit-flips exponentially with the number of photons in said two coherent states. However, it will be effective only if the confinement rate of said two coherent states is larger than the escape rates induced by the external sources of noise. The confinement rate is directly related to the 2-to-1 photon conversion rate.

First implementations of this stabilization scheme (Leghtas et al., Science 347, 853 (2015) "Confining the state of light to a quantum manifold by engineered two-photon loss" and Touzard et al., Physical Review X 8, 021005 (2018) "Coherent Oscillations inside a Quantum Manifold Stabilized by Dissipation") were unsuccessful to observe the exponential suppression of bit-flips because the superconducting circuit element used to engineer the 2-to-1 photon conversion, a so-called transmon, has spurious cross-Kerr terms which induce additional noise processes with escape rates given by the very large transmon-cat-qubit dispersive shift. The article "Exponential suppression of bit-flips in a qubit encoded in an oscillator", Lescanne R. et. Al., Nature Physics, 2020 (hereinafter Lescanne 2020) disclosed a much improved cat qubit by using an asymmetrical threaded superconducting quantum interference device (also referred to as "ATS") to engineer the 2-to-1 photon conversion. The ATS design has much lower cross-Kerr terms than the transmon, which allowed to observe the exponential suppression of bit-flips. However, a transmon was also used to measure the cat qubit state. Though less harmful to the cat qubit in this position, it still results in a saturation of the bit-flip time to a few milliseconds. A later work by Berdou et. al. in the article "One hundred second bit-flip time in a two-photon dissipative oscillator", arXiv:2204.09128, https://arxiv.org/pdf/2204.09128.pdf (hereinafter Berdou 2022) succeeded at increasing the bit-flip saturation time by 5 order of magnitudes, up to 100 seconds, by removing the measuring transmon and operating the ATS in a regime where it is supposed to be dynamically stable. This tremendous increase in the bit-flip time was possible because the ATS alone adds spurious noise processes with very low escape rates. However, the confinement rate achieved in Berdou 2022 was very low. Lescanne Raphaël: "Engineering multi-photon dissipation in superconducting circuits for quantum error correction", 9 March 2021 (2021-03-09), discloses a non-linear superconducting quantum circuit comprising a resonant portion. The resonant portion has a symbolic representation comprising a linear resonant portion and a non-linear resonant portion capacitively connected to the linear resonant portion.

The ratio of the confinement rate to the phase-flip rate of the cat qubit is the fundamental metric of quantum error correction with cat qubits. On the one hand, the confinement rate tells how strongly the cat qubit can be perturbed without experiencing a bit-flip, which is directly related to how fast a gate can be performed while preserving exponential suppression of bit-flips. On the other hand, the phase-flip rate tells in how much time one must perform the gates allowing to detect and correct for errors. Theoretical analysis suggest that this ratio should be larger than $10^4$. In Lescanne 2020 and Berdou 2022, this ratio is respectively 10 and 0.01.

No other circuit is known which provides a well performing cat qubit. The average stability lifetime of the other known cat qubits are no better than a few milliseconds, which is insufficient for building quantum circuits which can be practically used. Since the confinement rate is directly related to the engineered 2-to-1 photon conversion rate, a massive increase of the later is required in ATS-based circuits.

The application aims at improving the situation. To this end, the Applicant proposes a non-linear superconducting quantum circuit comprising at least one resonant portion and an asymmetrical threaded superconducting quantum interference device connected galvanically, said non-linear superconducting quantum circuit having a first mode with a first resonant frequency and a second mode with a second resonant frequency, the ratio between said first resonant frequency and said second resonant frequency being different from ½, said at least one resonant portion having a symbolic representation comprising a linear resonant portion comprising at least one inductance and at least one capacitor and a non-linear resonant portion comprising at least one capacitor and said asymmetrical threaded superconducting quantum interference device. Said linear resonant portion and non-linear resonant portion is connected galvanically and arranged respectively such that one has its elements connected in series, and the other one has its elements connected in parallel, said at least one resonant portion being configured with inductance and capacitance values which induce with said asymmetrical threaded superconducting quantum interference device said first mode and said second mode such that said non-linear superconducting quantum circuit has zero-point fluctuations of the superconducting phase across the asymmetrical threaded superconducting quantum interference device for the first mode and the second mode which are superior or equal to 0.05 rad.

This superconducting quantum circuit is advantageous because it has no coupling element which would reduce the participation of the buffer and/or memory modes in the ATS, hence the 2-to-1 photon conversion rate. In theory, it could be possible to minimize the detrimental impact of the coupling capacitor in the circuit of Lescanne 2020, but large capacitors are known to be lossy in superconducting circuits, which would increase the phase-flip rate and thus renders its application ineffectual in real-life implementation. Furthermore, this design contains the least elements possible, which minimizes the risks in terms of industrialization cost and feasibility.

In various embodiments, the method may present one or more of the following features:

- said linear portion comprises elements arranged in parallel and said non-linear portion comprises elements arranged in series,
- said linear resonant portion comprises elements arranged in series and said non-linear resonant portion comprises elements arranged in parallel,
- said non-linear superconducting quantum circuit lies on a dielectric substrate and is delimited from a common ground plane by exposed portions of said dielectric substrate, and said linear resonant portion and said non-linear resonant portion are realized in physically distinct portions of said non-linear superconducting quantum circuit,
- said non-linear superconducting quantum circuit is formed on a substantially planar substrate and has a width and a height which are shorter than the quarter wavelength corresponding respectively to said first resonant frequency and said second resonant frequency,
- said non-linear resonant portion and said linear resonant portion are galvanically connected to said common ground plane,
- said non-linear resonant portion and said linear resonant portion are galvanically isolated from said common ground plane,
- said non-linear superconducting quantum circuit lies on a dielectric substrate and is delimited from a common ground plane by exposed portions of said dielectric substrate, and said at least one resonant portion is realized into a transmission line,
- the first mode and the second mode are respective fundamental or higher order harmonics of said non-linear superconducting circuit,
- the first resonant frequency and the second resonant frequency are such that the difference between two times the first resonant frequency and the second resonant frequency is smaller than half the first resonant frequency and half the second resonant frequency,
- said at least one inductance and/or said transmission line is made by an array of Josephson junctions or a high kinetic inductance material.

The invention also concerns a quantum device comprising a non-linear superconducting quantum circuit according to one of the preceding claims, a first microwave source connected to said at least one resonant portion for providing a radiation having a frequency equal to said second resonant frequency, a second microwave source connected to said at least one resonant portion for providing a radiation having a frequency equal to the difference between two times the first resonant frequency and the second resonant frequency, and a load coupled to said at least one resonant portion such that substantially only the second mode is coupled to said load, said first mode thereby hosting a cat qubit. The device may further comprise a microwave filter for coupling to said load, said microwave filter being arranged to let the second resonant frequency pass and to block the first resonant frequency.

The invention also concerns a quantum computing system comprising at least one device according to the invention.

Other advantages of the invention will readily appear in the following description of the drawings, which show exemplary embodiments of the invention and on which:

- Figure 1 illustrates how a galvanic cat qubit circuit is incorporated in a device to stabilize quantum information,
- Figure 2 illustrates how to use the galvanic cat qubit circuit incorporated in a device to stabilize quantum information,
- Figure 3 represents an electrical equivalent diagram of a first embodiment of a galvanic cat circuit according to the invention,
- Figure 4 shows a diagram illustrating values of $\varphi$ for respectively the first mode and the second mode of the superconducting quantum circuit of Figure 3, along with corresponding $g_2/\varphi_p$ values,
- Figure 5 represents a realization of the circuit of Figure 3,
- Figure 6 represents an electrical equivalent diagram of a second embodiment of a galvanic cat circuit according to the invention,
- Figure 7 shows a diagram illustrating values of $\varphi$ for respectively the first mode and the second mode of the superconducting quantum circuit of Figure 6 along with corresponding $g_2/\varphi_p$ values,
- Figure 8 represents a realization of the circuit of Figure 6,
- Figure 9 represents a third embodiment of the galvanic cat circuit,

- Figure 10 represents graphs depicting the behavior of the circuit of Figure 9 as the length of the transmission line varies,
- Figure 11 shows the ratio of the square of the zero-point fluctuations of the phase of modes b and a in the linear capacitors and inductor of the first embodiment, in complement to Figure 4.

For a cat qubit to encode useful data and be stabilized, a 2-to-1 photon conversion needs to occur between a first mode (the memory) and a second mode (the buffer). Most of the existing prior art belongs to a family of cat qubits stabilized by parametric pumping dissipation. Parametric pumping dissipation techniques are used to bridge the gap between the frequencies of the two modes and perform the resonant 2-to-1 photon conversion when the second mode does not have a resonant frequency which is a multiple of 2 of the resonant frequency of the first mode. In other words, the external time-varying excitation used in parametric pumping dissipation relaxes the constraint on the resonant frequencies.

The first mode and the second mode of the superconducting quantum circuit may each correspond to natural resonance frequencies of the circuit. For example, each of the first mode and the second mode are an electromagnetic mode. Each of the first mode and the second mode may have a respective resonant frequency, e.g., the first mode may

$$f_a = \frac{\omega_a}{2\pi}$$

have a resonant frequency of the type and the second mode may have a resonant frequency of the type

$f_b = \frac{\omega_b}{2\pi}$, where $\omega_a$ and $\omega_b$ may be the angular frequencies of each respective mode. By "having" a first mode and a second mode, it is meant that the superconducting quantum circuit may comprise components operating in a superconducting regime which host the modes independently of each other or concurrently. In other words, the first mode and the second mode may be hosted in different subsets of components of the superconducting circuit or on the same subset of components.

The superconducting quantum circuit may be operated at temperatures close to absolute zero (e.g., 100 mK or less, typically 10 mK), and isolated as much as possible from the environment to avoid energy loss and decoherence, except for some tailored couplings. For example, only the second mode may be coupled to a dissipative environment, while the first mode may remain isolated from the environment.

The superconducting quantum circuit may be manufactured as one or more patterned layers of superconducting material (e.g., aluminum, tantalum, niobium among others, as known in the art) deposited on a dielectric substrate (e.g., silicon, sapphire among others).

Each of the one or more patterned layers may define lumped element resonators. A capacitive element may be formed (on a respective layer of the one or more patterned layers) with two neighboring plates of superconducting material. An inductive element may be formed with a superconducting wire. Alternatively, at least one of the one or more patterned layers may define portions of transmission lines each resonating at a frequency which depends on their length. The transmission lines may be, for example, co-planar wave guides, slotlines or microstrip lines. Yet alternatively, the circuit may be embedded in a 3D architecture which comprises high quality 3D modes machined or micromachined into bulk superconductor that can be used as any of the two modes.

The circuit may be integrated into a device which may comprise a load, a first microwave source, a second microwave source and a coupler. The coupler may be configured to connect the second mode of the superconducting quantum circuit to the load. The load is a dissipative element, e.g., an element with a given resistance - as opposed to a superconducting element - that is external to the superconducting circuit. The load dissipates pairs of photons converted from the first mode to the second mode through the 2-to-1 photon conversion. In other words, pairs of photons destroyed from the first mode are evacuated through the second mode via the load to the environment. The first microwave source may be configured to control the microwave radiation in amplitude and phase so as to apply a microwave radiation at a frequency substantially equal to the frequency of the second mode. The first microwave source thus drives photons in the form of the microwave radiation into the second mode which in turns drives pairs of photons in the first mode through the 2-to-1 photon conversion. This 2-to-1 photon conversion is reciprocal: it can conversely be 2 photons of the first mode to 1 photon of the second mode or 1 photon of the second mode to 2 photons of the first mode. The coupler is an element which may be connected galvanically, capacitively, or inductively to elements of the circuit hosting the second mode and which mediates the interaction between the second mode, the load and the microwave source.

The load may be a resistor, a matched transmission line or a matched waveguide. The expression "matched" should be interpreted as meaning that the transmission line or the waveguide are terminated by a resistance at an end different from the end connected to the elements hosting the second mode, the value of such resistance being chosen such that the power going towards the load is mostly absorbed. The load may be comprised within the first microwave source.

**In** various examples, the first microwave source may be placed at room temperature and connected to the circuit via coaxial cables. **In** various examples, attenuators may be placed between the microwave source and the circuit - that is, along the path of the microwave radiation applied by the microwave source - to thermalize the microwave radiation with the cryogenic environment. This allows to apply the microwave radiation without added thermal noise.

The second microwave source is used to provide microwave radiation at a frequency substantially equal to two times the resonant frequency of the first mode minus the resonant frequency of the second mode, so as to obtain the 2-to-1 photon conversion. Since the ATS has two superconducting loops which must be flux-pumped with adequate relative amplitude and phase, the radiation emitted by the second microwave source may be split to feed two different transmission lines or waveguides connected in the end to the two superconducting loops. Alternatively, two different microwave sources emitting signal at the same frequency as the second microwave source may be used to feed directly the two transmission lines or waveguides with adequate relative amplitude and phase.

Optionally, the device may comprise a microwave filter connected to the first mode and the second mode of the circuit. The microwave filter may be configured to only allow the coupling of the second mode to the load This microwave filter may be interleaved between the load and the coupler. From the point of view of the circuit, this filter aims at preventing the microwave photons in the first mode to escape the circuit. This can either be done by realizing a band stop filter at the first resonant frequency, or by realizing a bandpass filter at the second resonant frequency, or by realizing a high-pass (respectively low-pass) filter with a cutoff frequency in between the first and second resonant frequencies if the second (respectively first) resonant frequency is larger than the first (respectively second) resonant frequency, as the photon of the second mode are the only ones that need to dissipate in the environment. For some circuits, for instance when the two modes have different symmetries, the filter may not be necessary, and the proper position of the coupler in the circuit may be sufficient to prevent the dissipation of the first mode.

Thus, the device enables the stabilization of two coherent states in the first mode, that is, a quantum manifold of coherent states. For example, the first microwave source applying the microwave radiation to the second mode through the microwave filter may be seen as a 2-photon drive of the first mode once converted by the 2-to-1 photon conversion, and the load that dissipates photons of the second mode only may be seen as a 2-photon dissipation of the first mode once converted by the 2-to-1 photon conversion. The 2-photon drive and 2-photon dissipation enables the stabilization of two coherent states in the first mode.

The single photon drive on the second mode is formally described by the Hamiltonian
$$H_b = \hbar\epsilon_b b^\dagger + \hbar\epsilon_b^* b$$
where $\varepsilon_b$ is the single photon drive rate on the second mode due to the first microwave source. The single photon dissipation on the second mode is formally described by the Lindblad operator
$$L_b = \sqrt{\kappa_b} b$$
where $\kappa_b$ is the single photon dissipation resulting from the coupling of the second mode to the load.

The 2-photon drive is formally described by the Hamiltonian $H_2 = \hbar\varepsilon_2 a^{\dagger 2} + \hbar\varepsilon_2 a^2$ where $\varepsilon_2$ is the effective 2-photon drive rate. The 2-photon loss is formally described the Lindblad operator
$$L_2 = \sqrt{\kappa_2} a^2$$
where $\kappa_2$ is the 2-photon dissipation rate. The amplitude $\alpha$ of the stabilized coherent states is finally given by
$$\alpha = \left(\frac{2\epsilon_2}{\kappa_2}\right)^{1/2}$$
. The confinement rate of the coherent states is $K_{conf} = \kappa_2\alpha^2$.

In the regime $\kappa_b \gg g_2\alpha$ where $g_2$ is the 2-to-1 non-linear conversion rate between the first mode and the second mode, the buffer dynamics can be adiabatically eliminated, which yields $\varepsilon_2 = 2\varepsilon_b g_2/\kappa_b$ and
$$\kappa_2 = 4g_2^2/\kappa_b$$
.

In various examples, the superconducting circuit may have a symbolic representation, e.g., consisting of a set of interconnected dipoles. The expression "symbolic representation" should be interpreted as designating an arrangement of symbols and lines which specify a set of interconnected dipoles. The set of interconnected dipoles (also called components) forms a circuit structure (or topology) equivalent (in functioning) to the non-linear superconducting circuit.

In other words, and as classical in the field of superconducting circuits, the non-linear superconducting circuit is configured to achieve the functioning defined by its symbolic representation, in other words the functioning of the theoretical set of interconnected dipoles shown by the symbolic representation. Yet again in other words, while the circuit may be constructed using a patterned layer of superconducting material, it is to be understood that the circuit admits a symbolic representation by dipoles, for example, capacitors, inductors, and/or Josephson junctions. While the example dipoles describe discrete elements, the man skilled in the art clearly understands that these elements correspond to the equivalent circuit of distributed elements in a specific frequency range, e.g., at low frequency, as known in the field.

As known in the field, such distributed elements may have higher frequency modes which are irrelevant and unimportant for the dynamics described here. Hence, these distributed elements may be represented with the symbolic representation. This symbolic representation may be refined by adding elements such as series inductors with each wire connection or a parallel capacitor between any two nodes of the circuit or adding nodes and branches to take into account other modes of the distributed elements. Thus, the symbolic representation allows for a better description of the distributed elements without changing the working principle of the circuit. Hence, as known in the art, the physical circuit - that is the circuit which is actually manufactured - and its symbolic representation are considered equivalent by the man skilled in the art. Indeed, the refining dipoles of the symbolic representation only adjust the resonance frequencies or the zero-point fluctuation of the phase compared to the basic model. When designing the circuit, the final geometry may be fully and accurately simulated with a finite element solver which will readily give the frequencies of the modes, the dissipation originating from the loads and the zero-point fluctuation of the phase across the Josephson junctions which are the only unknown to compute the 2-to-1 photon conversion rate in any configuration.

The 2-to-1 photon interaction Hamiltonian is of the form $\frac{H_2}{\hbar} = g_2(t)a^2 b^\dagger + h.c$ . In these cases, the coupling term $g_2(t)$ is modulated via the parametric pump, where the pump injects an external time-varying parameter having a frequency $\omega_p = 2\omega_a - \omega_b$. The parametric pump is used in the prior art to render the non-linear interaction resonant.

The development of cat-qubit quantum circuit relies on superconducting circuits geometries allowing to suppress the bit-flips of a cat qubit encoded in a high-Q superconducting resonator, called the memory. For this purpose, a two-photon dissipation of the memory is engineered by coupling it to a low-Q superconducting resonator, called the buffer, through a non-linear superconducting dipole.

In the article Lescanne 2020, the non-linear Hamiltonian $H_2$ is engineered with an ATS superconducting dipole. The ATS dipole has the following potential energy: $U(\varphi) = 0.5 * E_L * \varphi^2 - 2 * E_J cos(\varphi_\sigma) * cos(\varphi - \varphi_\delta)$, where $E_L$ is the Josephson energy of the ATS shunt inductance, $E_J$ is the Josephson energy of the ATS SQUID junctions, $\varphi_\sigma$ (respectively $\varphi_\delta$) is the magnetic flux threading the common (respectively differential) loop modes of the ATS.

By choosing the following DC values of the magnetic fluxes, known as the saddle point: $|\varphi_{\sigma,DC}| = |<\varphi_{\delta,DC}| = \pi/2$, and flux pumping only the sigma mode with an amplitude $\varphi_p$ and frequency $\omega_p$, the potential energy becomes:

$$U(\varphi) = 0.5 * E_L * \varphi^2 - 2 * E_J * sin(\varphi_p cos(\omega_p t)) * sin(\varphi)$$

The phase $\varphi$ across the ATS is related to the modes a and b by:

$$\varphi = \varphi_a (a + a^\dagger) + \varphi_b (b + b^\dagger)$$

Where $\varphi_a$ and $\varphi_b$ are the zero-point fluctuations of the phase across the ATS of the first and second resonant mode, respectively. Expanding $U(\varphi_a (a + a^\dagger) + \varphi_b (b + b^\dagger))$ at third order in $\varphi_a$ and $\varphi_b$ and eliminating fast rotating terms yields the 2-to-1 conversion Hamiltonian $H_2$ with the 2-to-1 photon conversion rate $g_2 = 0.5 * E_j * \varphi_a^2 * \varphi_b * \varphi_p$.

The article Lescanne 2020 demonstrated that bit-flips are exponentially suppressed with the number of photons $\alpha^2$ of a cat qubit encoded in a resonator. However, this architecture uses a transmon coupled to the cat qubit as a measurement apparatus, which results in a bit-flip time saturating to a few milliseconds. The Applicant's work revealed that this is due to the confinement rate being too small to resist to dispersive frequency shifts induced by the thermal excitations of the measurement apparatus. Later work by the Applicant disclosed in the article Berdou 2022 increased the bit-flip saturation time by 5 orders of magnitude by removing the transmon and operating the ATS in a regime where it is supposed to be dynamically stable, despite an even lower confinement rate. More precisely, in the article Lescanne 2020, the ratio of the confinement rate to phase-flip rate is 10, whereas in Berdou 2022, this ratio is 0.01. As explained in the introductory part of the present application, such ratios are very far from the theoretically needed values.

The main problem with Lescanne 2020 and Berdou 2022 is that they offer no potential solution to significantly increase the two-photon dissipation rate. Indeed, the two-photon dissipation rate is related to the two-photon coupling rate $g_2 = 0.5 * E_j * \varphi_a^2 * \varphi_b * \varphi_p$. In the articles Lescanne 2020 and Berdou 2022, the buffer mode is localized on the ATS and the memory mode is weakly coupled capacitively to the buffer mode, hence to the ATS. This design allows to make large $\varphi_b$, but $\varphi_a$ is typically one to two orders of magnitude smaller. Since the formula of $g_2$ depends on the square of $\varphi_a$, this circuit geometry is very detrimental to the strength of the two-photon dissipation.

The only way to circumvent this problem is to sufficiently increase the capacitance coupling the memory and buffer modes of the circuits of Lescanne 2020 and Berdou 2022 to have the ATS participate strongly in both the buffer and memory modes. However, large capacitors are known to be lossy in superconducting circuits.

These prior arts are thus dead ends: their specific geometry is crucial to achieving the bit-flip stabilization, but it cannot be tweaked to allow for a large enough two-photon dissipation rate.

Examples and illustrations of the circuit and device according to the invention will now be discussed with reference to the figures. In the following, the expression "galvanic cat qubit circuit", "circuit", "superconducting quantum circuit" and "non-linear superconducting circuit" are interchangeable and designate the circuit performing the 2-to-1 photon conversion allowing to stabilize the cat qubit.

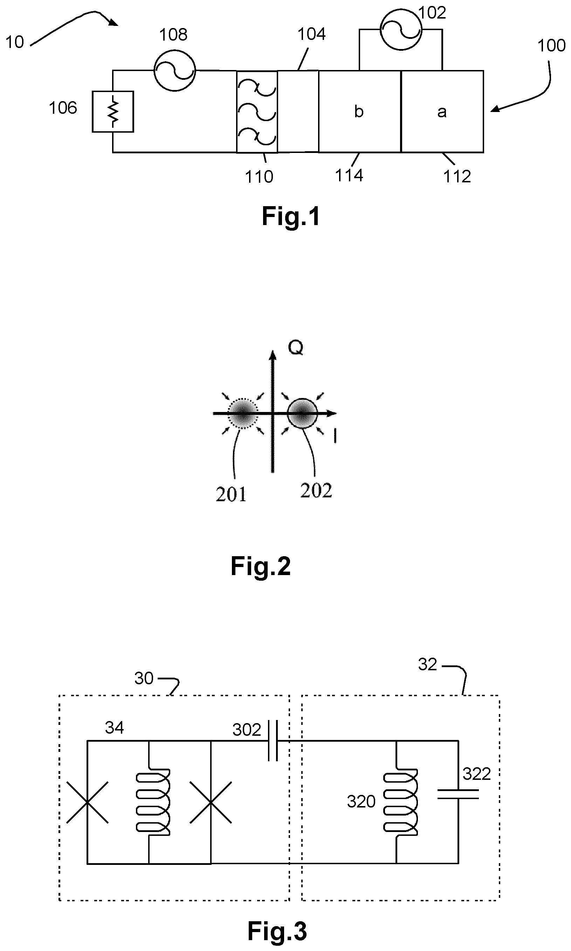

Figure 1 shows an example of a quantum device 10 comprising a galvanic cat qubit circuit according to the invention.

The device 10 comprises a non-linear superconducting circuit 100, a microwave source 102, a coupler 104, a load 106, another microwave source 108 and a microwave filter 110.

The non-linear superconducting circuit 100 performs the 2-to-1 photon conversion between a first mode $a$ referenced 112 and a second mode b referenced 114. In the following, first mode $a$ hosts a cat qubit, and is also known as the memory mode, whereas second mode b is used as a buffer in between the cat qubit and the environment.

Device 10 uses parametric pumping to stabilize the cat qubit, which means that the resonance frequencies of the first mode and the second mode are not of the type $2f_a = f_b$. In order to ensure the 2-to-1 photon conversion, a parametric pump provides radiation at a frequency of $2f_a - f_b$. This is performed by microwave source 102 which is connected to the non-linear superconducting circuit 100.

As will appear below, the non-linear superconducting circuit 100 according to the invention is very specific in that it comprises an ATS ("Asymmetrical threaded SQUID" or "Asymmetrical threaded Superconducting quantum interference device") which is galvanically coupled to the other elements of the non-linear superconducting circuit 100 hosting both modes a and b.

The components of the circuit hosting the second mode 114 are coupled via coupler 104 to the load 106. This coupling renders the second mode dissipative. The microwave source 108 is connected to the non-linear superconducting circuit 100 and is used to drive the second mode at its resonance frequency by emitting a radiation at frequency $f_b$. The microwave filter 110 is herein configured as a bandpass filter with a frequency $f_b$. Alternatively, the filter 110 may be configured as a band stop filter at a frequency $f_a$, and may be placed in between the environment and the two modes to isolate the first mode and thus prevent the first mode from suffering additional losses coming from unwanted coupling to the load 106. Alternatively, if may be configured as a low-pass (respectively high-pass) filter if $f_a > f_b$ (resp $f_b > f_a$). In other embodiments, the microwave filter 110 can be omitted when coupling between the load 106 and substantially only the second mode can be established.

Figure 2 illustrates the stabilization a quantum manifold of coherent states of the first mode achieved by the 2-to-1 photon conversion performed by the circuit 100.

This figure illustrates the Wigner function of a first mode undergoing a two-photon drive with rate $\varepsilon_2$ and two-photon dissipation with rate $\kappa_2$ that has two stable steady states (201, 202) of amplitude $\alpha = \sqrt{2\varepsilon_2/\kappa_2}$ and with opposite phase. Since there are two possible states, one can encode information: the state $|0\rangle$ 202 is circled with a solid line and the state $|1\rangle$ 201 with a dotted line. This encoding is robust against bit-flip errors that flip the system between state $|0\rangle$ and state $|1\rangle$ due to the stable nature of the dynamics that converges to the two states. The encoding does not correct the other error channel, that is, phase-flip errors. However, an additional error correcting scheme may be added to treat this separately. This stabilization is made possible by coupling to an extra mode and by engineering a 2-to-1 photon conversion between the first mode and the second mode.

In the diagrams of Figure 3, 6 and 9, only the circuit 100 will be described. The coupling to the load, the microwave source driving the buffer, and the microwave source driving the ATS for parametric pumping are voluntarily not shown for simplicity's sake.

Figure 3 represents an electrical equivalent diagram of a first embodiment of the galvanic cat circuit 100 of Figure 1.

Circuit 100 comprises a non-linear resonant portion 30 and a linear resonant portion 32. Non-linear portion comprises an ATS 34 and a capacitive element 302. The non-linear resonant portion 30 and linear resonant portion 32 are galvanically connected together. In order to avoid any misunderstanding, the expression "galvanically coupled" means that there are short electrically conducting portions which connect the non-linear resonant portion 30 and the linear resonant portion, i.e., a short electrically conducting track or any other mean ensuring a physically continuous conducting junction. The expression "short" means that the electrically conducting track has an impedance which is negligeable compared to the impedance of the non-linear resonant portion 30 and the linear resonant portion 32 at the frequencies $f_a$ and $f_b$. If this electrically conducting track has a non negligeable impedance, it will act as a voltage divider reducing the zero-point fluctuations $\varphi_a$ and $\varphi_b$ of the first and second resonant modes in the ATS, which is contrary to the aim of the invention. In the example described here, the electrically conducting track is also arranged so that it does not shunt any of the non-linear and linear resonant portions.

In the embodiment described herein, the non-linear resonant portion 30 comprises the ATS 34 and the capacitive element 302 which are connected in series. The linear resonant portion 32 comprises an inductive element 320 and a capacitive element 322 which are connected in parallel. If the non-linear resonant portion 30 (respectively linear resonant portion 32) was isolated from the rest of the circuit 100, it would host a first bare mode (respectively second bare more).

This galvanic circuit is minimal in the sense that its symbolic representation has the least possible number of elements to host two resonant modes (two capacitive elements 302 and 322, and two inductive elements 34 and 320). This is opposed to the state-of-the-art where the non-linear portion is coupled to the linear portion through a capacitive or inductive coupler, which leads to one resonant mode having a much lower participation in the ATS, hence lower zero-point fluctuations and a lower 2-to-1 photon conversion rate $g_2$. Since the minimal galvanic circuit proposed herein has a symbolic representation without such couplers, both resonant modes are expected to have large participations in the ATS. Although it may seem that the ATS 34 is capacitively coupled through the capacitor 302 to the linear bare mode, in fact, because it resonates with capacitor 302, they form the non-linear bare mode which is galvanically coupled to the linear bare mode.

This minimal galvanic circuit is also advantageous because it allows straightforward, simple and compact realizations, as will be seen later.

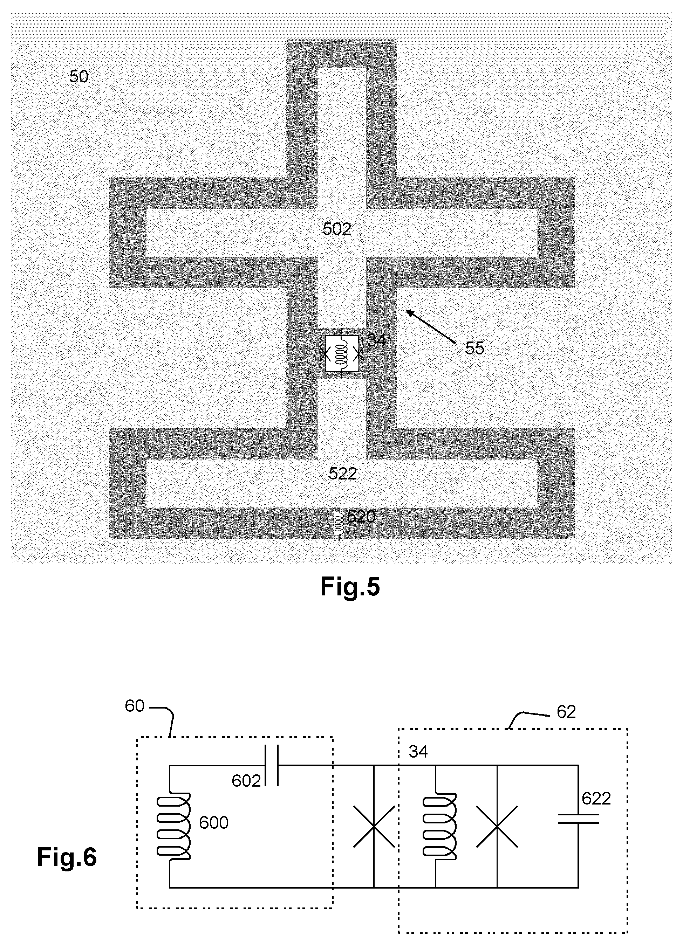

Furthermore, it is to be noted that having one series resonant portion and one parallel resonant portion is the only possible circuit topology. Thus, there exists only two possible minimal realizations of the circuit including an ATS, the one where the ATS is playing the role of the inductive element of the series resonant portion, as shown in Figure 3, and the one where the ATS is playing the role of the inductive element of the parallel resonant portion, as will be shown in Figure 6.

Using $L_{parallel}$ and $C_{parallel}$ as the values of, respectively, the inductive and capacitive elements of the parallel resonant portion, and $L_{series}$ and $C_{series}$ as the values of, respectively, the inductive and capacitive elements of the series resonant portion, these bare modes can be described:

- by their angular frequencies $w_{parallel} = 1/\sqrt{L_{parallel,eff} * C_{parallel}})$ and $w_{series} = 1/\sqrt{L_{series,eff} * C_{series}})$, with $L_{parallel,eff} = L_{parallel}$ and $L_{series,eff} = \frac{L_{series}L_{parallel}}{L_{series}+L_{parallel}}$

- by their impedances $Z_{parallel} = \sqrt{L_{parallel,eff}/C_{parallel}}$ and $Z_{series} = \sqrt{L_{series,eff}/C_{series}}$, or equivalently

- by their bare zero-point fluctuations $\varphi_{parallel,0} = \sqrt{\pi * Z_{parallel}/R_q})$ and $\varphi_{series,0} = \sqrt{\pi * Z_{series}/R_q})$, where $R_q = h/4e^2$ is the superconducting resistance quantum.

In the case of Figure 3 (respectively Figure 6), $L_{series} = L_{ats}$ (respectively $L_{parallel} = L_{ats}$), where the inductance $L_{ats}$ is the effective inductance value of the ATS 34 in the vicinity of the global minimum of its potential energy. At the saddle point, the effective inductance $L_{ats}$ is equal to the shunt inductance of the ATS 34.

The linear part of the Hamiltonian of the galvanic circuit reads:

$$H_{lin} = w_{a0}\, a_0^{\dagger}a_0 + w_{b0}\, b_0^{\dagger} b_0 + g\left(a_0 + a_0^{\dagger}\right)\left(b_0 + b_0^{\dagger}\right)$$, where the coupling rate is

$$g = \sqrt{w_{a0} * w_{b0}} * k,$$, with the dimensionless coupling constant $k = \sqrt{L_{parallel}/(L_{parallel} + L_{series})}$.

The aforementioned modes a and b are the modes diagonalizing the Hamiltonian $H_{lin}$ above. The dimensionless coupling constant k can take any value in between 0 and 1. A value close to 0 means weakly coupled modes while a value of 1 means maximally coupled modes. As expected, the minimal galvanic design allows to reach easily values of k of about ½ or more. The possibility to reach such large coupling constants is specific to the field of superconducting circuits as was first shown in Devoret et al. "Circuit-QED: How strong can the coupling between a Josephson junction atom and a transmission line resonator be?", Ann. Phys. 519, 767-779 (2007).

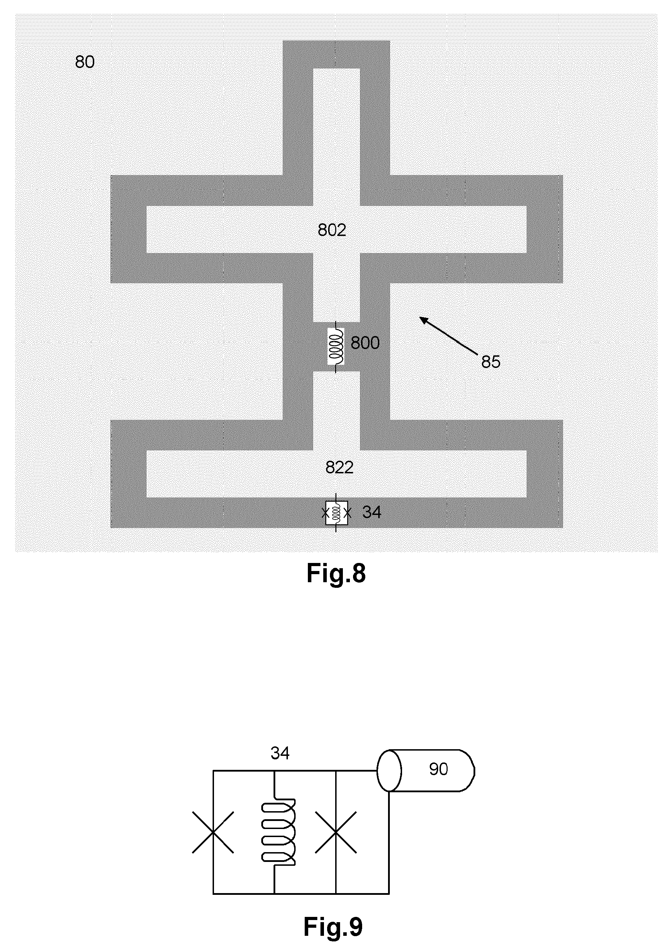

As will be shown in more details with figures 5 and 8, the inductive element and capacitive element form an LC resonator which may be implemented by distributed elements in the patterned layer of the superconducting material, such as:

- two neighboring plates forming a capacitor in parallel with a superconducting wire, a single Josephson junction or an array of Josephson junctions forming an inductor,
- a portion of superconducting transmission line which ends with two different boundary conditions (shorted to ground at one end and open at the other) forming a so-called $\lambda/4$ resonator. The transmission line being for example of the coplanar waveguide type or the microstrip type, or
- a portion of superconducting transmission line which ends with two identical boundary conditions (open-open or short-short) forming a so-called $\lambda/2$ resonator, the transmission line being for example of the coplanar waveguide type or the microstrip type.

The ATS 34 is realized as known in the art, for example in the article Lescanne 2020. It is a structure with two Josephson junctions in parallel, with an inductive element in parallel between them. As a result, the ATS 34 comprises two connected loops, each loop comprising a Josephson junction in parallel with the shunt inductive element. The ATS 34 has both of its loops flux biased in DC and AC. The DC bias sets the working point of the ATS. It may be operated near the so-called saddle point, which is a sweet spot in frequency and has small cross-Kerr terms. The AC flux bias corresponds to the parametric pump at $2f_a - f_b$. This AC flux bias is usually chosen to drive the common mode of the two loops.

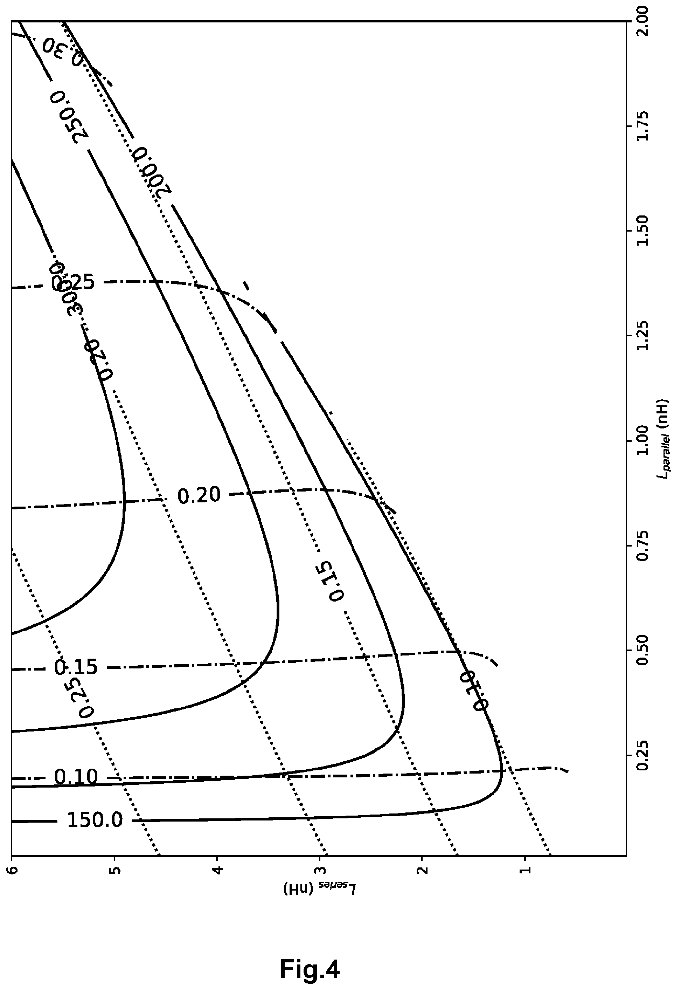

Figure 4 shows the results of $g_2/\varphi_p$ value curves which can be obtained for various values of the inductive element 320 ($L_{parallel}$) and the inductance of the ATS 34 ($L_{series}$). On this figure, the value $\varphi_a$ for the first mode is shown in radian as a dotted line, the value of $\varphi_b$ for the second mode is shown in radian as a dashed-dotted line, and corresponding $g_2/\varphi_p$ level lines are shown in MHz in full. These curves are established by fixing the first resonant frequency to 4.5 GHz and the second resonant frequency to 8.0 GHz, and by varying the value of inductive element 320 as easting, and the value of inductive element 34 as northing, while choosing the values of the capacitive elements 302 and 322 to obtain the above mentioned frequencies.

The reason for plotting the ratio $g_2/\varphi_p$ is that $\varphi_p$ is proportional to the amplitude of the parametric flux pump which is set by the amplitude of the microwave source 102, which is somehow arbitrary. On the contrary, the ratio

$$\frac{g_2}{\varphi_p} = 0.5 * E_j * \varphi_a^2 * \varphi_b$$

depends only on intrinsic parameters of the circuit 100. Figure 4 is calculated by assuming the ATS 34 is operated at its saddle point. In this case, the values of $\varphi_a$, $\varphi_b$, $w_a$ and $w_b$ depend only on the

$$E_j = \frac{\varphi_0^2}{L_j}$$

inductance $L_{ats}$ of the ATS and are independent of $L_j$. Since the Josephson energy $E_j$ reads , it sounds like one can make $g_2/\varphi_p$ arbitrarily large by ever decreasing $L_j$. However, the ATS dynamics becomes more instable as the ratio $L_{ats}/L_j$ is increased (as evidenced in the article by Burgelman et.al. "Structurally stable subharmonic regime of a driven quantum Josephson circuit", https://arxiv.org/abs/2206.14631). In Figure 4, this ratio is set to $L_{ats}/L_j = 2$, which corresponds to the value in Lescanne 2020.

This figure shows that, for conventional values of inductive elements 34 and 320, values of $g_2/\varphi_p$ of over 250 MHz can easily be attained. In effect, the works by the Applicant have shown that values over 100 MHz are guaranteed, which is an order of magnitude over the known prior art, and that values of several hundred MHz can be achieved. In comparison, the value of $g_2/\varphi_p$ achieved in Lescanne 2020 was only 9.6 MHz. In Berdou 2022 it was at least 1 order of magnitude smaller than that.

Figure 4 also shows the zero-point fluctuations $\varphi_a$ and $\varphi_b$. Even though only the product $\varphi_a^2 * \varphi_b$ matters for $g_2$, the actual values of $\varphi_a$ and $\varphi_b$ have a direct impact on the spurious terms generated by the ATS, which may in turn induce noise processes escaping the confinement of the stabilized coherent states.

Since the 2-to-1 photon conversion Hamiltonian relies on a third order expansion of the ATS potential energy in $\varphi_a$ $*(a + a^\dagger) + \varphi_b *(b + b^\dagger)$, a rule of thumb known from the man skilled in the art is to keep $\varphi_a * max(\alpha, 1/2)$ and $\varphi_b * max(\beta, 1/2)$ small compared to $\pi$. Here, $\alpha$ is the amplitude of the coherent state stabilized in the cat qubit and $\beta$ is the amplitude of the residual electromagnetic field in the buffer.

The term ½ in max($\alpha$ or $\beta$, 1/2) is used to account for the minimal zero-point fluctuations. With $\alpha = 2$, it is considered safe to keep $\varphi_a < 0.1$. On the other hand, $\beta$ tends to be very close to zero, so max($\beta$, 1/2) = 1/2. It means larger values of $\varphi_b$ can be tolerated, typically $\varphi_b < 0.3$. Figure 4 shows that $g_2$ can be increased to more than one order of magnitude compared to the state-of-the-art while keeping safe values of the parameters.

Figure 4 also shows that more aggressive values of $\varphi_a$ and $\varphi_b$ could be easily reached, resulting in a further increase of $g_2$. It should be noted that it is not known yet by how much $\varphi_a$ and $\varphi_b$ can be pushed, since the cat qubit domain is quite recent and lacks such studies. The galvanic cat design, with its obvious potential to realize large $\varphi_a$ and $\varphi_b$, will therefore allow to perform such studies.

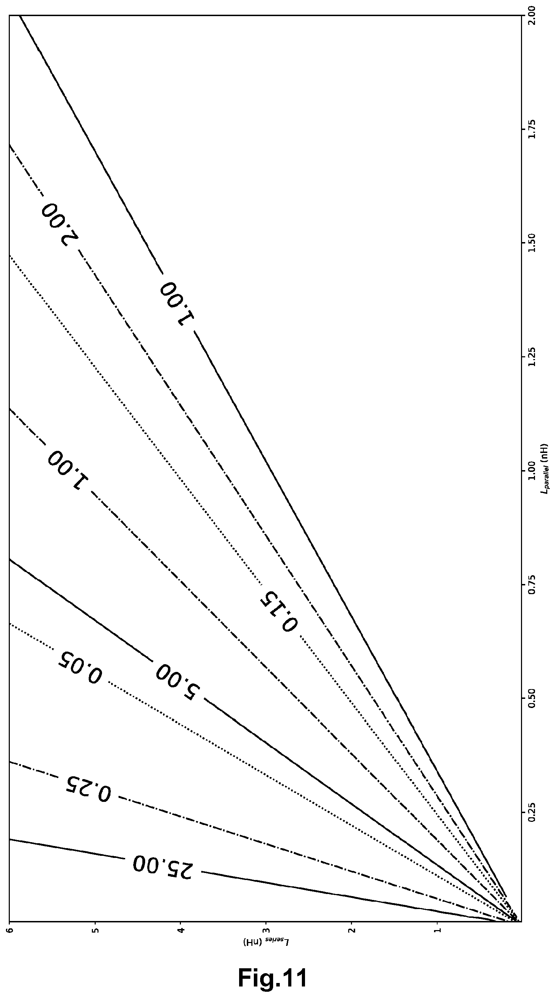

Figure 11 shows in full the ratio $\frac{\varphi_{b,parallel}}{\varphi_{a,parallel}}$ of the square of the zero-point fluctuations of modes b and a across the parallel portion, that is the parallel combination of the linear capacitor 322 and the linear inductor 320 of the linear resonant portion 32 in the case of Figure 3. It also shows the ratio $\left(\frac{\varphi_{b,C_{series}}}{\varphi_{a,C_{series}}}\right)^2$ as dotted lines and the ratio

$$\left(\frac{\varphi_{b,L_{\text{series}}}}{\varphi_{a,L_{\text{series}}}}\right)^2$$

as dash-dotted lines of the square of the zero-point fluctuations of modes b and a across the capacitor 302 and ATS 34, respectively, of the non-linear resonant portion 30. The decay rates of modes a and b in the load are proportional to the square of $\varphi_{a/b,\text{parallel}}$, $\varphi_{a/b,C_{\text{series}}}$ or $\varphi_{a/b,L_{\text{series}}}$, if the load is coupled with the coupler 104 to, respectively, the parallel portion 320/322, the series capacitor 302 or the ATS 34. As can be seen, the ratios have at best a value of the order of 1 in the region of safe parameters. That is, the geometry of the quantum circuit completely hybridizes the memory and buffer modes such that a negligeable level of protection of the memory is provided from decay in the load 106. It is the price to pay for this galvanic cat circuit design with a minimal number of components.

Yet, thanks to the large value of the dimensionless coupling constant k, the first resonant frequency and the second resonant frequency can be spaced wide apart from each other (3.5 GHz in Figure 4), thus giving a lot of room to the microwave filter 106 to strongly reject the field at the frequency of the first resonant mode.

Furthermore, it is also possible to choose the first resonant frequency and the second resonant frequency so that the pump frequency $2f_a - f_b$ is somewhat far from both $f_a$ and $f_b$. For example, $2f_a - f_b$ is made smaller than $f_a/2$ and $f_b/2$. This can be obtained by choosing a buffer frequency $f_b$ not too far from twice the memory frequency $f_a$ which results in a small pump frequency $f_p = 2 f_a - f_b$. For instance, the value of $f_p$ is 1 GHz in Figure 4, which is more than four times smaller than $f_a$ and eight times smaller than $f_b$.

It is advantageous because the first order term of the expansion of the ATS potential energy shows that the parametric pump can directly drive the circuit. As shown in the Supplementary Material of Lescanne 2020, this driving results in spurious dynamical AC Stark shift and dynamical cross-Kerr terms, which are detrimental to the cat qubit operations. With a low pump frequency, the direct driving of the circuit is much less efficient, which results in much smaller dynamical AC Stark shift and dynamical cross-Kerr.

Another advantage is that the value $2f_a - f_b$ can be made distant from both $f_a$ and $f_b$, such that a second microwave filter could be introduced into the parametric pump line to prevent the first mode from leaking into the parametric pump line.

This is all the more surprising as, with such strongly hybridized modes, the possibility to have a low loss memory mode is highly counterintuitive. The rationale is that the field of quantum computing is quite young, especially in the cat qubit domain, and it is generally preferred to make very incremental changes. One of the reasons to have an ATS localized on the second mode and have the first mode weakly coupled capacitively to the second mode in Lescanne 2020 and Berdou 2022 is to minimize the decay of the first mode due to the decay of the second mode in the load. Indeed, conventionally, it is considered much preferable to couple the non-linear elements of the quantum circuit to a single mode and weakly couple other modes to it.

Galvanically coupling the non-linear element is manifestly not an incremental change and goes against all prejudices.

Finally, a large spacing in frequency in between $f_a$ and $f_b$ makes the design more robust to nanofabrication uncertainties, such as the well-known problem of the variability of the inductances of the various Josephson junctions in the circuit, which primarily affects the accuracy of the prediction of $f_a$ and $f_b$.

Figure 5 shows a realization of the circuit of Figure 3.

Similar elements have been given like reference numerals. Only the first number of the reference numeral will change from "3" to "5", i.e., capacitive element 322 of Figure 3 is referenced 522 on Figure 5.

The figure is a top view of the layout of a superconducting chip designed by the Applicant to correspond to the circuit of Figure 3. Light grey parts correspond to metallized surface with tantalum or aluminum. Grey parts correspond to the substrate made in sapphire on which the circuit lies. Other materials can be used to realize the superconducting circuit, for instance niobium, NbTi or TiN for the metallization and silicon or quartz for the chip.

The circuit comprises a ground plane 50 on which the circuit 55 is formed. The non-linear resonant portion comprises the ATS 34 and a capacitive element 502 which has a cross shape. The linear resonant portion 30 is formed by the bottom portion of this figure, a big rectangle forming the capacitive element 522, to which an array of Josephson junctions 520 forming an inductive element are connected.

Also not shown on Figure 5, the coupler 104 could be realized advantageously, according to Figure 11, by coupling capacitively a CPW transmission line to the electrode 522. Furthermore, the cat qubit could be coupled to another cat qubit or a readout transmon through CPW buses capacitively coupled to the different branches of the electrode 502. Capacitively coupling a CPW to an electrode such as 502 and 522 is routinely done with superconducting circuits. Finally, two CPW passing close to the respective sides of the ATS 34 could be used to flux bias it, both in DC to set its working point and in AC to realize the parametric pump.

The circuit of Figure 5 shows a lumped and grounded realization of the resonant modes of the circuit of figure 1. This design is said to be lumped because the total size of the circuit 100 is shorter than the quarter-wavelength the first mode and the second mode. This design is said to be grounded because the first mode and the second mode correspond to oscillations of charge and current in between electrodes and the ground plane 50 to which they are galvanically coupled through the ATS 34.

Other realization of the inductors could be possible, for instance geometric inductors made of meandered or spiraled lines.

This grounded design is more sensitive to the imperfections of the ground plane and may experience more crosstalk than differential designs, but it is much more compact and minimize parasitic capacitances that may shunt the ATS and therefore alter the accuracy of the symbolic representation in Figure 3. The simplicity and symmetry of this design illustrates the effectiveness of the galvanic cat circuit with a minimal number of components.

In another embodiment, the design could be differential, meaning that the first mode and the second mode correspond to oscillations of charge and current in between pairs of electrodes which are galvanically isolated from the ground plane 50. Differential designs occupy more space than grounded designs, but they have the advantage of offering a better isolation to the lossy components of the ground place, such as the wire bonds (not shown on the drawings), or other components that may be patterned on the chip, such as other cat qubits, and thus reduce crosstalk.

Figure 6 represents a second embodiment which is similar to that of Figure 3. The main difference is that the non-linear resonant portion 62 elements are now in parallel, whereas they were in series in the embodiment of Figure 3. Similarly, the elements of linear resonant portion 60 are now in series, whereas they were in parallel in the embodiment of Figure 3.

Similar elements have been given like reference numerals. Only the first number of the reference numeral will change from "3" to "6", i.e., capacitive element 302 of Figure 3 is referenced 602 on Figure 6.

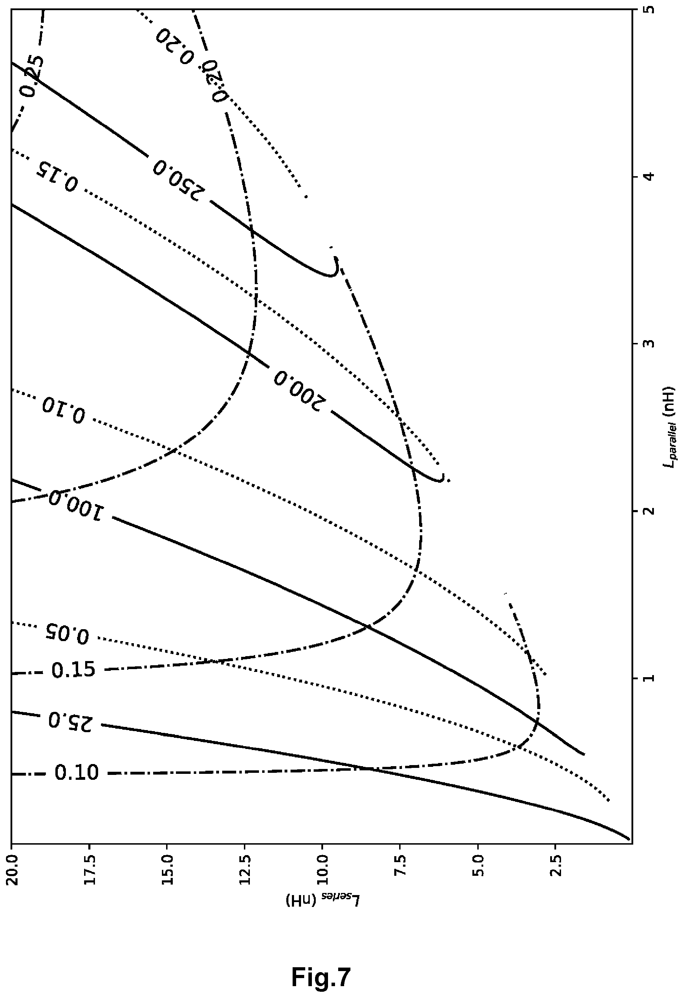

Figure 7 is a figure similar to Figure 4, but based on the circuit of Figure 6. For simplicity's sake, it will not be described further. It is to be noted that Figure 11 and its description remain quantitatively valid for the circuit of Figure 6.

Figure 8 shows a realization of the circuit of Figure 6. It is similar to the realization of the circuit of Figure 3 shown in figure 5, except for the linear inductance and ATS 34 that have been exchanged such that the linear and non-linear resonant portions have also been exchanged. This design is advantageous in that the ATS 34 is now galvanically coupled to the ground plane which allows an easier and larger coupling to the flux lines (not shown).

Figure 9 shows a third embodiment of the galvanic cat circuit.

In the embodiment of Figure 9, there is only one resonant portion which generates both the first mode and the second mode with the ATS 34. This embodiment is different from the embodiments of Figure 3 and Figure 6 in that the properties of the first resonant mode and of the second resonant mode are usually not accurately described with a simplified symbolic representation involving only two LC resonators. This exemplifies the reason why the invention goes against the existing prejudices: while a low coupling constant k would allow to understand well the first mode and the second mode from a simple perturbative analysis including only two bare modes of the resonant portion and the ATS, it cannot be so here and more bare modes of the resonant portion have to be taken into account.

As shown on this figure, the ATS 34 is connected to an open-ended transmission line 90. This circuit is galvanic since the ATS is directly terminating the transmission line hosting the resonant modes. It can be realized in the same materials as the elements of Figure 5. If the characteristic impedance of the transmission line required to reach a given $\varphi_b$ or $\varphi_a$ is too large to be made geometrically, the center conductor of the transmission line could be replaced by a high kinetic inductance material or a chain of wide Josephson junctions. Finally, the transmission line could be realized with various geometries, for instance coplanar waveguide (CPW), microstrip or slotline. In the example of Figure 9, CPW 90 could be capacitively or inductively connected to the microwave filter 110 and the load 106 for coupling to the environment.

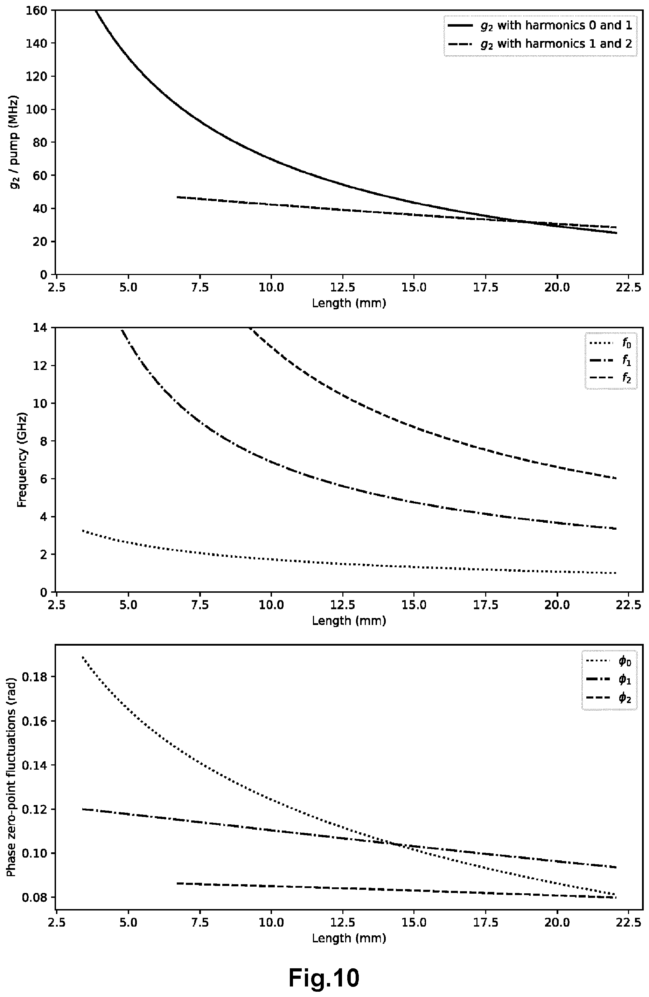

Figure 10 is somewhat similar to Figure 4 and 7, with the difference that it takes into account that, due to the realization of a transmission line, several harmonics have to be taken into account. As a result, there are three graphs of Figure 10 which describe the behavior of the transmission line harmonics 0, 1 and 2.

In Figure 10, the ATS parameters are the same as in Figure 4 and 7. The CPW is assumed to have a characteristic impedance of 50 $\Omega$ and, without loss of generality, an effective relative permittivity $\varepsilon_r$ = 5.6, typical for CPW on sapphire, is taken.

The graph at the top of Figure 10 represents the results of $g_2/\varphi_p$ which can be obtained for various lengths of the CPW. The full line corresponds to a 2-to-1 photon rate $g_2/\varphi_p$ calculated with the first resonant mode (respectively second resonant mode) taken as the first (or fundamental) harmonics (respectively second harmonics) of the non-linear quantum circuit, in which case the first resonant mode index a=0 and the second resonant mode index b=1. The dashed line corresponds to a 2-to-1 photon rate $g_2/\varphi_p$ calculated with the first resonant mode (respectively second resonant mode) taken as the second harmonics (respectively third harmonics) of the non-linear quantum circuit, in which case the first resonant mode index a=1 and the second resonant mode index b=2.

On the graph in the middle of Figure 10, the values $f_0$, $f_1$ and $f_2$ of the frequencies of the respectively first (or fundamental), second and third harmonics are represented in GHz.

On the graph at the bottom of Figure 10, the values $\varphi_0$, $\varphi_1$ and $\varphi_2$ of the zero-point fluctuations of the phase across the ATS 34 of the respectively first (or fundamental), second and third harmonics are represented in radian.

Contrary to Figure 4 and Figure 7, it is necessary to show the first resonant frequency and the second resonant frequency variation as they are not fixed. It appears that large detunings $f_b$ - $f_a$ of several GHz can be reached, as well as

values of $g_2/\varphi_p$ well beyond the state-of-the-art for safe values of $\varphi_a$ and $\varphi_b$.

It is obvious to the man skilled in the art that it is possible to adjust the values of $f_a$, $f_b$, $\varphi_a$, $\varphi_b$ and $g_2/\varphi_p$ in order to fit a given application by tweaking, for instance, the characteristic impedance of the transmission line, or using other harmonics. It is also possible to change the termination of the transmission line, though some terminations, for instance an inductive short, have to be included in the potential energy of the ATS and, as a consequence, would modify its working point and dynamics.

**Claims**

1. Non-linear superconducting quantum circuit comprising at least one resonant portion (30,32 ; 60,62) and an asymmetrical threaded superconducting quantum interference device (34) connected galvanically, said non-linear superconducting quantum circuit having a first mode (a) with a first resonant frequency and a second mode (b) with a second resonant frequency, the ratio between said first resonant frequency and said second resonant frequency being different from ½, said at least one resonant portion (30,32 ; 60,62) having a symbolic representation comprising a linear resonant portion (32;60) comprising at least one inductance (320;600) and at least one capacitor (322;602) and a non-linear resonant portion (30;62) comprising at least one capacitor (302;622) and said asymmetrical threaded superconducting quantum interference device (34), said linear resonant portion (30) and non-linear resonant portion (32) being connected galvanically and arranged respectively such that one has its elements connected in series, and the other one has its elements connected in parallel, said at least one resonant portion (30,32) being configured with inductance and capacitance values which induce with said asymmetrical threaded superconducting quantum interference device (34) said first mode (a) and said second mode (b) such that said non-linear superconducting quantum circuit (100) has zero-point fluctuations of the superconducting phase across the asymmetrical threaded superconducting quantum interference device (34) for the first mode (a) and the second mode (b) which are superior or equal to 0.05 rad.

2. Non-linear superconducting quantum circuit according to claim 1, wherein said linear portion (32) comprises elements arranged in parallel and said non-linear portion (30) comprises elements arranged in series.

3. Non-linear superconducting quantum circuit according to claim 1, wherein said linear resonant portion (60) comprises elements arranged in series and said non-linear resonant portion (62) comprises elements arranged in parallel.

4. Non-linear superconducting quantum circuit according to claim 2 or 3, wherein said non-linear superconducting quantum circuit lies on a dielectric substrate and is delimited from a common ground plane (50; 80) by exposed portions of said dielectric substrate, and said linear resonant portion and said non-linear resonant portion are realized in physically distinct portions of said non-linear superconducting quantum circuit.

5. Non-linear superconducting quantum circuit according to claim 4, wherein said non-linear superconducting quantum circuit is formed on a substantially planar substrate and has a width and a height which are both shorter than the quarter wavelength corresponding to said first resonant frequency and shorter than the quarter wavelength corresponding to said second resonant frequency.

6. Non-linear superconducting quantum circuit according to claim 4 or 5, wherein said non-linear resonant portion and said linear resonant portion are galvanically connected to said common ground plane (50 ; 80).

7. Non-linear superconducting quantum circuit according to claim 4 or 5, wherein said non-linear resonant portion and said linear resonant portion are galvanically isolated from said common ground plane.

8. Non-linear superconducting quantum circuit according to claim 1, wherein said non-linear superconducting quantum circuit lies on a dielectric substrate and is delimited from a common ground plane by exposed portions of said dielectric substrate, and said at least one resonant portion is realized into a transmission line (90).

9. Non-linear superconducting quantum circuit according to claim 8, wherein the first mode (a) and the second mode (b) are of respective fundamental or higher order harmonics of said non-linear superconducting circuit (100).

10. Non-linear superconducting quantum circuit according to one of the preceding claims, wherein the first resonant frequency and the second resonant frequency are such that the difference between two times the first resonant frequency and the second resonant frequency is smaller than half the first resonant frequency and half the second resonant frequency.

11. Non-linear superconducting quantum circuit according to claim 8 or 9, wherein said transmission line (90) is made by an array of Josephson junctions or a high kinetic inductance material.

12. Non-linear superconducting quantum circuit according to one of the preceding claims, wherein said at least one inductance (320;600) is made by an array of Josephson junctions or a high kinetic inductance material.

13. Quantum device comprising a non-linear superconducting quantum circuit according to one of the preceding claims, a first microwave source (108) connected to said at least one resonant portion (30,32 ; 60,62 ; 90) for providing a radiation having a frequency equal to said second resonant frequency, a second microwave source (102) connected to said at least one resonant portion (30,32 ; 60,62 ; 90) for providing a radiation having a frequency equal to the difference between two times the first resonant frequency and the second resonant frequency, and a load (106) coupled to said at least one resonant portion (30,32 ; 60,62 ; 90) such that only the second mode (b) is coupled to said load (106), said first mode (a) thereby hosting a cat qubit.

14. Quantum device according to claim 13, further comprising a microwave filter (110) for coupling to said load (106), said microwave filter (110) being arranged to let the second resonant frequency pass and to block the first resonant frequency.

15. Quantum computing system comprising at least one device according to claim 13 or 14.

**Patentansprüche**

1. Nichtlineare superleitende Quantenschaltung, umfassend mindestens einen Resonanzabschnitt (30, 32; 60, 62) und eine superleitende Quanteninterferenzvorrichtung mit asymmetrische Einfügung (34), die galvanisch verbunden ist, wobei die nichtlineare superleitende Quantenschaltung einen ersten Modus (a) mit einer ersten Resonanzfrequenz und einen zweiten Modus (b) mit einer zweiten Resonanzfrequenz aufweist, wobei das Verhältnis zwischen der ersten Resonanzfrequenz und der zweiten Resonanzfrequenz von ½ verschieden ist, wobei der mindestens eine Resonanzabschnitt (30, 32; 60, 62) eine symbolische Darstellung aufweist, die einen linearen Resonanzabschnitt (32; 60), der mindestens eine Induktivität (320; 600) und mindestens einen Kondensator (322; 602) umfasst, und einen nichtlinearen Resonanzabschnitt (30; 62) umfasst, der mindestens einen Kondensator (302; 622) und die superleitende Quanteninterferenzvorrichtung mit asymmetrische Einfügung (34) umfasst, wobei der lineare Resonanzabschnitt (30) und der nichtlineare Resonanzabschnitt (32) galvanisch verbunden und jeweils so angeordnet sind, dass die Elemente des einen in Reihe geschaltet sind und die Elemente des anderen parallel geschaltet sind, wobei der mindestens eine Resonanzabschnitt (30, 32) mit Induktivitäts- und Kapazitätswerten konfiguriert ist, die mit der superleitende Quanteninterferenzvorrichtung mit asymmetrische Einfügung (34) den ersten Modus (a) und den zweiten Modus (b) induzieren, so dass die nichtlineare superleitende Quantenschaltung (100) Nullpunktschwankungen der superleitenden Phase über die superleitende Quanteninterferenzvorrichtung mit asymmetrische Einfügung (34) für den ersten Modus (a) und den zweiten Modus (b) aufweist, die größer oder gleich 0,05 rad sind.

2. Nichtlineare superleitende Quantenschaltung nach Anspruch 1, wobei der lineare Abschnitt (32) parallel angeordnete Elemente umfasst und der nichtlineare Abschnitt (30) in Reihe angeordnete Elemente umfasst.

3. Nichtlineare superleitende Quantenschaltung nach Anspruch 1, wobei der lineare Resonanzabschnitt (60) in Reihe angeordnete Elemente umfasst und der nichtlineare Resonanzabschnitt (62) parallel angeordnete Elemente umfasst.

4. Nichtlineare superleitende Quantenschaltung nach Anspruch 2 oder 3, wobei die nichtlineare superleitende Quantenschaltung auf einem dielektrischen Substrat liegt und von einer gemeinsamen Erdungsebene (50; 80) aus durch freiliegende Abschnitte des dielektrischen Substrats begrenzt ist, und der lineare Resonanzabschnitt und der nichtlineare Resonanzabschnitt in physikalisch getrennten Abschnitten der nichtlinearen superleitenden Quantenschaltung ausgeführt sind.

5. Nichtlineare superleitende Quantenschaltung nach Anspruch 4, wobei die nichtlineare superleitende Quantenschaltung auf einem im Wesentlichen ebenen Substrat gebildet ist und eine Breite und eine Höhe aufweist, die beide kürzer sind als die Viertelwellenlänge, die der ersten Resonanzfrequenz entspricht, und kürzer als die Viertelwellenlänge, die der zweiten Resonanzfrequenz entspricht.

6. Nichtlineare superleitende Quantenschaltung nach Anspruch 4 oder 5, wobei der nichtlineare Resonanzabschnitt und der lineare Resonanzabschnitt galvanisch mit der gemeinsamen Erdungsebene (50; 80) verbunden sind.

7. Nichtlineare superleitende Quantenschaltung nach Anspruch 4 oder 5, wobei der nichtlineare Resonanzabschnitt und der lineare Resonanzabschnitt galvanisch von der gemeinsamen Erdungsebene getrennt sind.

8. Nichtlineare superleitende Quantenschaltung nach Anspruch 1, wobei die nichtlineare superleitende Quantenschaltung auf einem dielektrischen Substrat liegt und von einer gemeinsamen Erdungsebene aus durch freiliegende Abschnitte des dielektrischen Substrats begrenzt ist, und der mindestens eine Resonanzabschnitt in einer Übertragungsleitung (90) ausgeführt ist.

9. Nichtlineare superleitende Quantenschaltung nach Anspruch 8, wobei der erste Modus (a) und der zweite Modus (b) von jeweiligen Grundschwingungen oder Oberschwingungen höherer Ordnung der nichtlinearen superleitenden Schaltung (100) sind.

10. Nichtlineare superleitende Quantenschaltung nach einem der vorhergehenden Ansprüche, wobei die erste Resonanzfrequenz und die zweite Resonanzfrequenz derart sind, dass die Differenz zwischen dem Zweifachen der ersten Resonanzfrequenz und der zweiten Resonanzfrequenz kleiner als die Hälfte der ersten Resonanzfrequenz und die Hälfte der zweiten Resonanzfrequenz ist.

11. Nichtlineare superleitende Quantenschaltung nach Anspruch 8 oder 9, wobei die Übertragungsleitung (90) aus einer Anordnung von Josephson-Kontakten oder einem Material mit hoher kinetischer Induktivität besteht.

12. Nichtlineare superleitende Quantenschaltung nach einem der vorhergehenden Ansprüche, wobei die mindestens eine Induktivität (320; 600) aus einer Anordnung von Josephson-Kontakten oder einem Material mit hoher kinetischer Induktivität besteht.

13. Quantenvorrichtung, umfassend eine nichtlineare superleitende Quantenschaltung nach einem der vorhergehenden Ansprüche, eine erste Mikrowellenquelle (108), die mit dem mindestens einen Resonanzabschnitt (30, 32; 60, 62; 90) verbunden ist, um eine Strahlung bereitzustellen, die eine Frequenz aufweist, die der zweiten Resonanzfrequenz gleich ist, eine zweite Mikrowellenquelle (102), die mit dem mindestens einen Resonanzabschnitt (30, 32; 60, 62; 90) verbunden ist, um eine Strahlung bereitzustellen, die eine Frequenz aufweist, die der Differenz zwischen dem Zweifachen der ersten Resonanzfrequenz und der zweiten Resonanzfrequenz gleich ist, und eine Last (106), die mit dem mindestens einen Resonanzabschnitt (30, 32; 60, 62; 90) gekoppelt ist, so dass nur der zweite Modus (b) mit der Last (106) gekoppelt ist, wobei der erste Modus (a) somit ein Katzen-Qubit aufnimmt.

14. Quantenvorrichtung nach Anspruch 13, ferner umfassend einen Mikrowellenfilter (110) zur Kopplung mit der Last (106), wobei der Mikrowellenfilter (110) so angeordnet ist, dass er die zweite Resonanzfrequenz durchlässt und die erste Resonanzfrequenz blockiert.

15. Quantencomputersystem, umfassend mindestens eine Vorrichtung nach Anspruch 13 oder 14.

**Revendications**

1. Circuit quantique supraconducteur non linéaire comprenant au moins une partie résonante (30, 32 ; 60, 62) et un dispositif d'interférence quantique supraconducteur à insertion asymétrique (34) connecté galvaniquement, ledit circuit quantique supraconducteur non linéaire présentant un premier mode (a) avec une première fréquence de résonance et un second mode (b) avec une seconde fréquence de résonance, le rapport entre ladite première fréquence de résonance et ladite seconde fréquence de résonance étant différent de ½, ladite au moins une partie résonante (30, 32 ; 60, 62) présentant une représentation symbolique comprenant une partie résonante linéaire (32 ; 60) comprenant au moins une inductance (320 ; 600) et au moins un condensateur (322 ; 602) et une partie résonante non linéaire (30 ; 62) comprenant au moins un condensateur (302 ; 622) et ledit dispositif d'interférence quantique supraconducteur à insertion asymétrique (34) , ladite partie résonante linéaire (30) et ladite partie résonante non linéaire (32) étant connectées galvaniquement et agencées respectivement de sorte que l'une ait ses éléments connectés en série et que l'autre ait ses éléments connectés en parallèle, ladite au moins une partie résonante (30, 32) étant configurée avec des valeurs d'inductance et de capacitance qui induisent avec ledit dispositif d'interférence quantique supraconducteur à insertion asymétrique (34) ledit premier mode (a) et ledit second mode (b) de sorte que ledit circuit quantique supraconducteur non linéaire (100) ait des fluctuations de point zéro de la phase supraconductrice à travers le dispositif d'interférence quantique supraconducteur à insertion asymétrique (34) pour le premier mode (a) et le second mode (b) qui sont supérieures ou égales à 0,05 rad.

2. Circuit quantique supraconducteur non linéaire selon la revendication 1, dans lequel ladite partie linéaire (32) comprend des éléments agencés en parallèle et ladite partie non linéaire (30) comprend des éléments agencés en série.

3. Circuit quantique supraconducteur non linéaire selon la revendication 1, dans lequel ladite partie résonante linéaire (60) comprend des éléments agencés en série et ladite partie résonante non linéaire (62) comprend des éléments agencés en parallèle.

4. Circuit quantique supraconducteur non linéaire selon la revendication 2 ou 3, dans lequel ledit circuit quantique supraconducteur non linéaire repose sur un substrat diélectrique et est délimité à partir d'un plan de masse commun (50 ; 80) par des parties exposées dudit substrat diélectrique, et ladite partie résonante linéaire et ladite partie résonante non linéaire sont réalisées dans des parties physiquement distinctes dudit circuit quantique supraconducteur non linéaire.

5. Circuit quantique supraconducteur non linéaire selon la revendication 4, dans lequel ledit circuit quantique supraconducteur non linéaire est formé sur un substrat sensiblement plan et a une largeur et une hauteur qui sont toutes les deux plus courtes que le quart d'onde correspondant à ladite première fréquence de résonance et plus courtes que le quart d'onde correspondant à ladite seconde fréquence de résonance.

6. Circuit quantique supraconducteur non linéaire selon la revendication 4 ou 5, dans lequel ladite partie résonante non linéaire et ladite partie résonante linéaire sont connectées galvaniquement audit plan de masse commun (50 ; 80).

7. Circuit quantique supraconducteur non linéaire selon la revendication 4 ou 5, dans lequel ladite partie résonante non linéaire et ladite partie résonante linéaire sont isolées galvaniquement dudit plan de masse commun.

8. Circuit quantique supraconducteur non linéaire selon la revendication 1, dans lequel ledit circuit quantique supraconducteur non linéaire repose sur un substrat diélectrique et est délimité à partir d'un plan de masse commun par des parties exposées dudit substrat diélectrique, et ladite au moins une partie résonante est réalisée dans une ligne de transmission (90).

9. Circuit quantique supraconducteur non linéaire selon la revendication 8, dans lequel le premier mode (a) et le second mode (b) présentent des harmoniques fondamentaux ou d'ordre supérieur respectifs dudit circuit supraconducteur non linéaire (100).

10. Circuit quantique supraconducteur non linéaire selon l'une des revendications précédentes, dans lequel la première fréquence de résonance et la seconde fréquence de résonance sont telles que la différence entre deux fois la première fréquence de résonance et la seconde fréquence de résonance est plus petite que la moitié de la première fréquence de résonance et la moitié de la seconde fréquence de résonance.

11. Circuit quantique supraconducteur non linéaire selon la revendication 8 ou 9, dans lequel ladite ligne de transmission (90) est constituée d'un réseau de jonctions Josephson ou d'un matériau à haute inductance cinétique.

12. Circuit quantique supraconducteur non linéaire selon l'une des revendications précédentes, dans lequel ladite au moins une inductance (320 ; 600) est constituée d'un réseau de jonctions Josephson ou d'un matériau à haute inductance cinétique.

13. Dispositif quantique comprenant un circuit quantique supraconducteur non linéaire selon l'une des revendications précédentes, une première source hyperfréquence (108) connectée à ladite au moins une partie résonante (30, 32 ; 60, 62 ; 90) pour fournir un rayonnement ayant une fréquence égale à ladite seconde fréquence de résonance, une seconde source hyperfréquence (102) connectée à ladite au moins une partie résonante (30, 32 ; 60, 62 ; 90) pour fournir un rayonnement ayant une fréquence égale à la différence entre deux fois la première fréquence de résonance et la seconde fréquence de résonance, et une charge (106) couplée à ladite au moins une partie résonante (30, 32 ;

60, 62 ; 90) de sorte que seul le second mode (b) soit couplé à ladite charge (106), ledit premier mode (a) possédant ainsi un qubit de chat.

14. Dispositif quantique selon la revendication 13, comprenant en outre un filtre hyperfréquence (110) pour le couplage à ladite charge (106), ledit filtre hyperfréquence (110) étant agencé pour laisser passer la seconde fréquence de résonance et pour bloquer la première fréquence de résonance.

15. Système informatique quantique comprenant au moins un dispositif selon la revendication 13 ou 14.

**Fig.1**

**Fig.2**

**Fig.3**

**Fig.4**

**Fig.5**

**Fig.6**

**Fig.7**

**Fig.8**

**Fig.9**

Fig.10

Fig.11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LEGHTAS et al.** Confining the state of light to a quantum manifold by engineered two-photon loss. *Science*, 2015, vol. 347, 853
- **TOUZARD et al.** Coherent Oscillations inside a Quantum Manifold Stabilized by Dissipation. *Physical Review X*, 2018, vol. 8, 021005
- **LESCANNE R.** Exponential suppression of bit-flips in a qubit encoded in an oscillator. *Nature Physics*, 2020
- **BERDOU**. One hundred second bit-flip time in a two-photon dissipative oscillator. *arXiv:2204.09128*, https://arxiv.org/pdf/2204.09128.pdf

- **LESCANNE RAPHAËL**. *Engineering multi-photon dissipation in superconducting circuits for quantum error correction*, 09 March 2021
- **DEVORET et al.** Circuit-QED: How strong can the coupling between a Josephson junction atom and a transmission line resonator be?. *Ann. Phys.*, 2007, vol. 519, 767-779
- **BURGELMAN**. *Structurally stable subharmonic regime of a driven quantum Josephson circuit*, https://arxiv.org/abs/2206.14631